# EUROPEAN PATENT APPLICATION

(11) **EP 3 101 784 A1**
(43) Date of publication of application: **07.12.2016**
(21) Application number: 16172158.4
(22) Date of filing: 31.05.2016
(51) Int. Cl.: H02K 7/08, H02K 7/14, F04C 2/10

(54) **ELECTRIC PUMP**

(30) Priority: 05.06.2015 JP 2015114976
(71) Applicant: AISIN SEIKI KABUSHIKI KAISHA, Kariya-shi, Aichi 448-8650 (JP)
(72) Inventor: IWASE, Shogo, Kariya-shi, Aichi 448-8650 (JP); NAGATA, Kenjiroh, Kariya-shi, Aichi 448-8650 (JP)
(74) Representative: Kramer Barske Schmidtchen Patentanwälte PartG mbB

(57) **Abstract**

An electric pump (1) includes: a motor rotor (12) having a cylindrical yoke (14); a pump portion (20) having outer and inner rotors (22, 21); a shaft (11) transmitting a rotational force from the motor rotor to the pump portion; a motor housing (31) in which a coil portion (13B) is fixed to an inner peripheral surface and the motor rotor is housed on the inside of the coil portion; and a pump main body (32) housing the pump portion, wherein the pump main body has a bearing portion (33) supporting a portion of the shaft between the motor rotor and the inner rotor, and the inner rotor has a first recessed portion (23) of a diameter greater than that of the shaft on a side facing the bearing portion and a part of the bearing portion is inserted into the first recessed portion to be disposed.

## Description

### TECHNICAL FIELD

This disclosure relates to an electric pump that is driven by an electric motor.

### BACKGROUND DISCUSSION

An electric pump including a pump portion having an outer rotor and an inner rotor, and a motor portion having a motor rotor that is rotated by an electromagnetic force is disclosed in, for example, JP 2010-144595A (Reference 1). The pump portion and the motor portion are housed in a case.

The motor rotor is connected to one end of a shaft and forms a rotor. The rotor has a magnet that is disposed to face a stator fixed to an inner peripheral surface of the case. The inner rotor of the pump portion is connected to the other end of the shaft. The rotor is rotated by interacting between the magnet and coils wound around the stator and then a rotational force is transmitted to the pump portion.

The shaft is journaled by a bearing portion provided in the case in a portion between the motor rotor and the pump portion. Here, if a region of the bearing portion of the motor rotor is short relative to a region along an axial direction of the shaft, in a case where the motor rotor is subjected to force in a direction in which the motor rotor is axially deflected by an influence of the electromagnetic force, the axial deflection of the shaft cannot be reliably suppressed. Therefore, in the electric pump described in Reference 1, the bearing portion is extended to an inner region of the motor rotor in a radial direction.

On the other hand, also in the pump portion, force generated by suction and discharge of fluid is applied to the inner rotor. The force is along a direction of a rotational axis of the inner rotor, a rotation surface of the inner rotor is inclined by the force, and as a result, a bending force acts on the shaft. If the axial deflection occurs in the shaft due to the bending force, there is a concern that noise and vibration occur, and the bearing portion or the shaft is worn.

### SUMMARY

Thus, a need exists for an electric pump, which can appropriately suppress axial deflection of a shaft of a pump portion in view of such a circumference.

A feature of an electric pump according to an aspect of this disclosure resides in that the electric pump includes a motor rotor that has a cylindrical yoke and is rotated by an electromagnetic force; a pump portion that has an outer rotor and an inner rotor; a shaft that transmits a rotational force from the motor rotor to the pump portion by fixing the motor rotor on one side and fixing the inner rotor on the other side; a motor housing in which a coil portion is fixed to an inner peripheral surface and the motor rotor is housed on the inside of the coil portion; and a pump main body that houses the pump portion, the pump main body has a bearing portion that supports a portion of the shaft between the motor rotor and the inner rotor, and the inner rotor has a first recessed portion of a diameter greater than that of the shaft on a side facing the bearing portion and a part of the bearing portion is inserted into the first recessed portion to be disposed.

According to this configuration, a part of the bearing portion is extended on the inside of the inner rotor of the pump portion in the radial direction and thereby it is possible to widen a journal range of the shaft. Furthermore, a mounting position of the inner rotor on the shaft and a position of the bearing portion supporting the shaft approach each other along a longitudinal direction of the shaft. Therefore, a force to incline a rotation surface of the inner rotor acts on the inner rotor and in a case where the force is transmitted to the shaft, the bearing portion journals a portion of the shaft to which the force is transmitted. Therefore, there is no room for bending deformation of the shaft. As a result, since the bearing portion is required only to receive the force to incline the shaft, it is possible to significantly reduce the occurrence of a pressing force and a frictional force generated between the bearing portion and the shaft. Therefore, a rotational operation of the shaft is stabilized, the occurrence of noise and vibration is suppressed, and it is possible to suppress wear of the bearing portion and the shaft.

Another feature of the electric pump according to the aspect of this disclosure resides in that the motor rotor has a second recessed portion of a diameter greater than that of the shaft on a side facing the bearing portion and a part of the bearing portion is inserted into the second recessed portion to be disposed.

According to this configuration, it is possible to extend the bearing portion on the inside of the motor rotor in the radial direction and to set the journal range of the shaft more widely. Therefore, the axial deflection of the shaft due to oscillation of the motor rotor is unlikely to occur and a wear prevention effect of the bearing portion and the shaft is also increased.

Another feature of the electric pump according to the aspect of this disclosure resides in that the yoke includes a first yoke that is positioned on an inner peripheral side of the coil portion and a second yoke that is provided continuously to the first yoke and protrudes on a side opposite to the pump portion with respect to the first yoke in an axial direction of the yoke. A hole portion capable of fixing the shaft is formed in the second yoke and the second recessed portion is formed on a side facing the bearing portion in the first yoke.

In order to lengthen the bearing portion, if a recessed portion is formed in the motor rotor, a fixing region of the motor rotor to the shaft is shortened.

Then, according to this configuration, the yoke includes the first yoke which is positioned on the inner peripheral side of the coil portion and in which the second recessed portion is formed, and the second yoke that is provided continuously to the first yoke and protrudes on a side opposite to the pump portion with respect to the first yoke in the axial direction.

Thus, in the second recessed portion provided in the first yoke, the shaft of the motor portion is journaled and thereby it is possible to suppress the axial deflection of the shaft while ensuring a magnetic force operation of the yoke. On the other hand, since the hole portion capable of fixing the shaft is formed in the second yoke, the motor rotor is reliably fixed to the shaft. A portion on the side opposite to the pump portion with respect to the yoke has a space relatively affording the necessary space to lay wiring of coils and the like. Therefore, it is possible to effectively use a dead space by disposing the second yoke in the space.

Another feature of the electric pump according to the aspect of this disclosure resides in that an end portion of the shaft protruding from the pump portion is journaled by the pump main body.

According to this configuration, the end portion of the shaft is journaled by the pump main body and thereby the shaft is journaled in two positions in which the pump portion is sandwiched. Therefore, the axial deflection of the shaft due to an external force acting on the pump portion is unlikely to occur and a rotation state of the shaft is stabilized.

Another feature of the electric pump according to the aspect of this disclosure resides in that the shaft and the bearing portion are formed of a ferrous material.

In a case where the shaft and the bearing portion are configured of other materials, a clearance between the shaft and the bearing portion is greatly changed by a difference in thermal expansion coefficients of the shaft and the bearing portion. Therefore, it is impossible to strictly set an interval between the shaft and the bearing portion and a supporting state of the shaft becomes unstable due to influences of a temperature change and the like.

Thus, in this configuration, the shaft and the bearing portion are configured of the same ferrous material, and thereby a change in the clearance between the shaft and the bearing portion is reduced. Therefore, it is possible to strictly set the interval between the shaft and the bearing portion and to stably maintain the rotation of the shaft by the bearing portion.

Another feature of the electric pump according to the aspect of this disclosure resides in that the yoke includes magnetic bodies that are laminated so that a through-hole continuous along the axial direction of the yoke is formed and a resin portion with which the through-hole is filled.

According to this configuration, the yoke includes the resin portion with which the through-hole of the magnetic bodies laminated in the axial direction is filled. Therefore, it is possible to reliably hold a shape of the laminated magnetic bodies. Therefore, it is possible to easily configure the yoke including a plurality of integrated magnetic bodies.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a sectional view of an electric pump of a first embodiment;
Fig. 2 is a sectional view that is taken along arrow line II-II of Fig. 1;
Fig. 3 is a sectional view that is taken along arrow line III-III of Fig. 1; and
Fig. 4 is a sectional view of an electric pump of a second embodiment.

### DETAILED DESCRIPTION

Hereinafter, embodiments of this disclosure will be described with reference to the drawings. An electric pump of the embodiments includes, for example, an oil supply system for lubrication in an automobile and the like. However, the application of the electric pump is not limited to the automobile and may be used for supply of fluid other than oil.

### First Embodiment

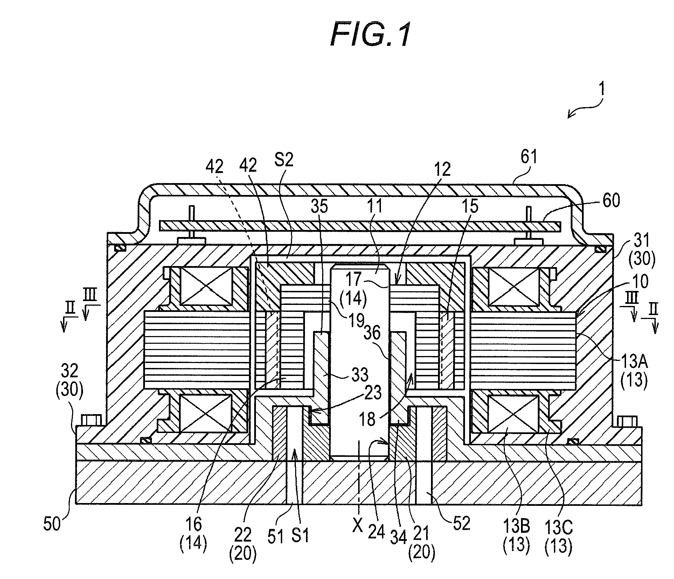

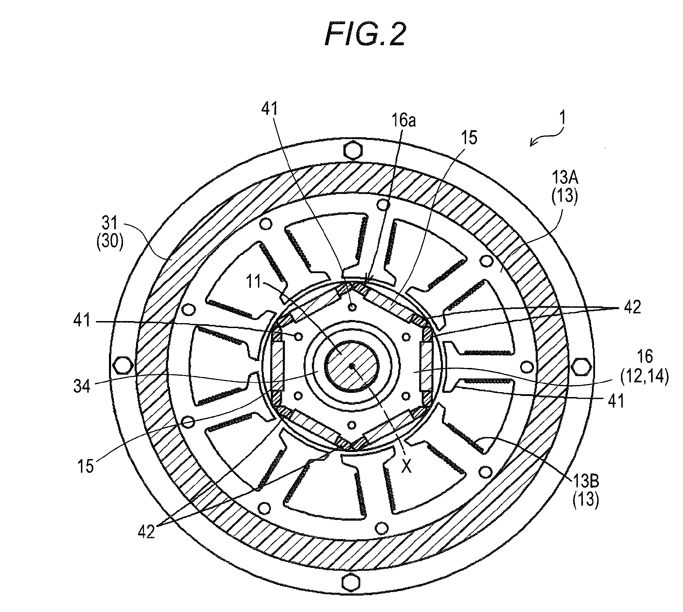

As illustrated in Figs. 1 to 3, an electric pump 1 includes a motor portion 10, a pump portion 20, and a case 30 for housing the motor portion 10 and the pump portion 20. The case 30 is configured by connecting a motor housing 31 for housing the motor portion 10 and a pump body 32 (an example of the pump main body) for housing the pump portion 20.

The motor portion 10 is configured to include a shaft 11 that is rotatably supported around a shaft axis X, a motor rotor 12 that is fixed to one side of the shaft 11 and is integrally rotated with the shaft 11, and a field coil 13 (stator). The field coil 13 is disposed in a region surrounding the motor rotor 12 of the motor housing 31. The field coil 13 is configured of a plurality of tooth portions 13A of a stator core formed by laminating electromagnetic steel sheets, coil support frames 13C that are disposed above and below the tooth portions 13A, and a coil portion 13B that is wound around the coil support frame 13C.

The motor rotor 12 has a cylindrical yoke 14 that is formed by laminating the electromagnetic steel sheets (an example of a magnetic body) and a permanent magnet 15 that is disposed in the yoke 14. The yoke 14 is configured by superposing a first yoke 16 and a second yoke 17 in order from a side closer to the pump body 32 in a direction of the shaft axis X of the shaft 11. The electromagnetic steel sheets are laminated and thereby a through-hole 16a continuous along the direction of the shaft axis X is formed in the cylindrical yoke 14. The permanent magnet 15 is inserted into the through-hole 16a. A plurality of permanent magnets 15 are arranged such that an N pole and an S pole are alternated in a circumferential direction. The motor rotor 12 is rotated by receiving an electromagnetic force of the field coil 13.

The pump portion 20 is configured as a trochoid pump to include an inner rotor 21 that is fixed to the shaft 11 on a side (other side) opposite to the motor portion 10 and is rotated by a driving force of the motor portion 10, and an outer rotor 22 that is disposed on an outer periphery of the inner rotor 21. The trochoid pump is configured such that a plurality of tooth portions of a tooth surface shape according to a trochoidal curve are formed on the outer periphery of the inner rotor 21 and tooth portions having a number of teeth greater than the number of teeth of the inner rotor 21 by one are formed on an inner periphery of the outer rotor 22. The inner rotor 21 is rotated around the shaft axis X and the outer rotor 22 is rotated around an eccentric shaft to be spaced apart from the shaft axis X.

In the case 30, the motor housing 31 is formed of a resin material and the pump body 32 is formed of a metal material. The motor housing 31 and the pump body 32 are connected by bolts and the like in a state of being superposed in a direction along the shaft axis X.

The motor housing 31 is a cylindrical body, the field coil 13 is fixed to the inner peripheral surface thereof, and a housing space S2 of the motor rotor 12 is provided on the inner periphery side of the field coil 13. The pump body 32 has a housing space S1 of the pump portion 20 that is formed in a recessed shape on a side opposite to the motor rotor 12 in the direction of the shaft axis X. A control substrate 60 is disposed in an end surface of the motor housing 31 and the control substrate 60 is covered by a lid portion 61. A pump cover 50 is provided in the end surface of the pump body 32 in which the housing space S1 is formed. In the embodiment, the pump main body is configured of the pump body 32 and the pump cover 50. The pump cover 50 is formed of a plate of, for example, the metal material and includes a suction port 51 and a discharge port 52.

The pump body 32 has a bearing portion 33 that supports the shaft 11 at a portion between the motor portion 10 and the pump portion 20. The shaft 11 and the bearing portion 33 are formed of a ferrous material. If the shaft 11 and the bearing portion 33 are formed of the same ferrous material, thermal expansion coefficients of the shaft 11 and the bearing portion 33 are close to each other, and a change in a clearance between the shaft 11 and the bearing portion 33 is reduced. Therefore, it is possible to strictly set an interval between the shaft 11 and the bearing portion 33. Thus, it is possible to stably hold a rotation of the shaft 11 by the bearing portion 33. Moreover, in the embodiment, the pump body 32 is configured of the ferrous material itself.

The bearing portion 33 includes a first extending portion 34 that is positioned in the housing space S1 of the pump portion 20 and a second extending portion 35 that is positioned in the housing space S2 of the motor rotor 12. A bearing hole 36 into which the shaft 11 is inserted is formed in the bearing portion 33.

A first recessed portion 23 and a press-fit hole 24 having a diameter smaller than that of the first recessed portion 23 are formed in the inner rotor 21 of the pump portion 20 in order from a side closer to the bearing portion 33 in the direction of the shaft axis X. The first recessed portion 23 has a diameter into which the first extending portion 34 is able to be inserted. The first recessed portion 23 is formed on a side facing the pump body 32 in the direction of the shaft axis X, but does not communicate with a suction chamber and a discharge chamber (not illustrated) provided in the pump body 32.

The bearing portion 33 is extended to the inside of the inner rotor 21 of the pump portion 20 in a radial direction by inserting the first extending portion 34 into the first recessed portion 23. Therefore, it is possible to widely set a region in which the bearing portion 33 journals the shaft 11. Furthermore, a mounting position of the inner rotor 21 on the shaft 11 and a position of the bearing portion 33 supporting the shaft 11 are closer to each other along a longitudinal direction of the shaft 11. Therefore, in a case where a force to incline a rotation surface of the inner rotor 21 acts on the inner rotor 21 and is transmitted to the shaft 11, the bearing portion 33 journals the portion of the shaft 11 to which the force is transmitted. Therefore, there is no room for bending deformation of the shaft 11. Since the bearing portion 33 is required only to receive the force to incline the shaft 11, it is possible to significantly reduce the occurrence of a pressing force and a frictional force generated between the bearing portion 33 and the shaft 11. As a result, a rotational operation of the shaft 11 is stabilized, the occurrence of noise and vibration is suppressed, and it is possible to suppress wear of the bearing portion 33.

The yoke 14 of the motor rotor 12 is configured by superposing the first yoke 16 and the second yoke 17 in order from a side closer to the pump body 32 in the direction of the shaft axis X. The first yoke 16 is positioned on the inner peripheral surface of the coil portion 13B. On the other hand, the second yoke 17 is provided continuous to the first yoke 16 and protrudes on a side opposite to the pump portion 20 in the direction of the shaft axis X. A second recessed portion 18 is formed in the first yoke 16 and a press-fit hole 19 having a diameter smaller than that of the second recessed portion 18 is formed in the second yoke 17. The shaft 11 and the second extending portion 35 of the bearing portion 33 are inserted into the second recessed portion 18 of the first yoke 16 to be disposed and the end portion of the shaft 11 is press-fitted into the press-fit hole 19 of the second yoke 17 to be fixed.

Then, the bearing portion 33 is disposed to extend to the inside of the motor rotor 12 in the radial direction and thereby the bearing portion 33 can widely set a region in which the bearing portion 33 can journal the shaft 11. Furthermore, since the bearing portion 33 (second extending portion 35) is positioned on the inside of the motor rotor 12 in the radial direction, the axial deflection of the shaft 11 due to the oscillation of the motor rotor 12 is suppressed. Therefore, the rotational operation of the shaft 11 is further stabilized and a wear prevention effect of the bearing portion 33 is also increased.

A distance between the outer peripheral surface of the second extending portion 35 of the bearing portion 33 and the inner peripheral surface of the first yoke 16 is set to be greater than a distance between the outer peripheral surface of the first yoke 16 and the field coil 13. The first yoke 16 and the field coil 13 are disposed with an extremely narrow interval so that the electromagnetic force efficiently acts on the motor portion 10. On the other hand, the second extending portion 35 and the first yoke 16 may be disposed with an interval in which neither are in contact with each other and strict setting of the interval is not required.

A dowel 41 is formed in each of the laminated electromagnetic steel sheets configuring the yoke 14 and a plurality of electromagnetic steel sheets are cylindrically laminated by the dowels 41. The cylindrical yoke 14 includes a resin portion 42 with which a portion over the inside of the first yoke 16 and a surface of the shaft 11 on the end portion side from the outer peripheral side in the second yoke 17 are filled. The resin portion 42 of the first yoke 16 is configured of resin with which spaces of the permanent magnet 15 of the through-hole 16a on both end sides are filled. The laminated electromagnetic steel sheets are connected by the resin portion 42 and thereby a shape of the yoke 14 is held. The resin portion 42 may be provided at least in the direction of the shaft axis X of the motor rotor 12.

### Second Embodiment

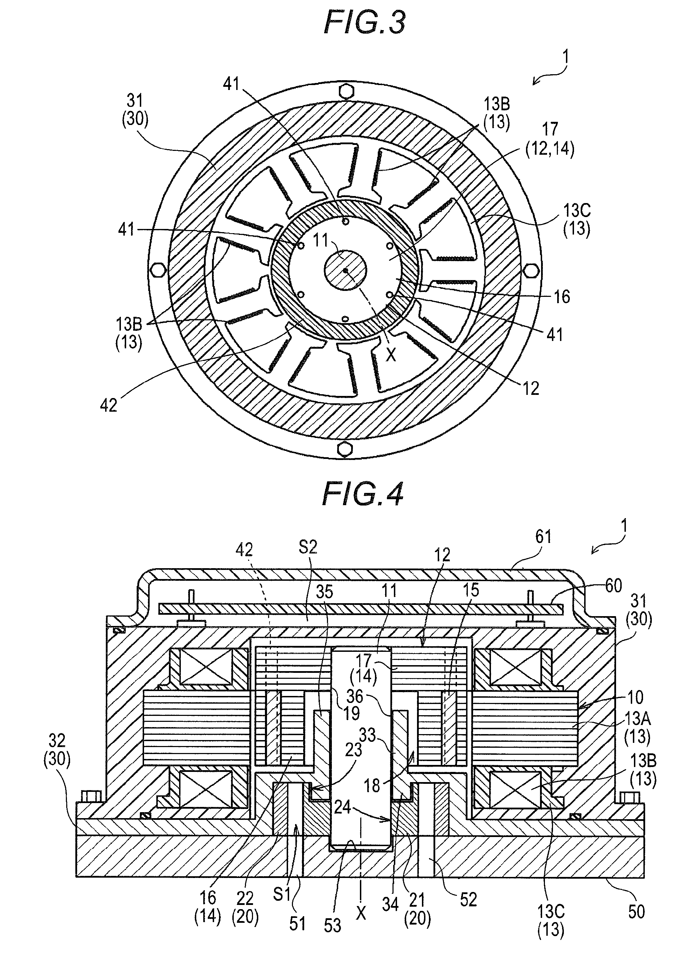

In the embodiment, as illustrated in Fig. 4, a shaft 11 is configured such that an end portion protruding from a pump portion 20 is journaled by a member disposed closer to the pump portion 20 in addition to a bearing portion 33 of a pump body 32. Specifically, as illustrated in Fig. 4, an end portion of the shaft 11 is journaled by a pump cover 50 covering the pump portion 20. The pump cover 50 is connected to the pump body 32. A recessed portion 53 around a shaft axis X is formed in the pump cover 50 and the end portion of the shaft 11 is journaled by the recessed portion 53. As described above, since the shaft 11 is journaled in two portions (bearing portion 33 and recessed portion 53) in the direction of the shaft axis X, the shaft 11 is stably supported and a rotational operation is stabilized.

In addition, the resin portion 42, with which the motor rotor 12 is filled, is provided only in the direction of the shaft axis X and is not provided on the end portion side of the shaft 11 in a second yoke 17. However, in the embodiment, a thickness of the second yoke 17 in the direction of the shaft axis X is set to be greater than that of the first embodiment. Therefore, since a connection region between the motor rotor 12 and the shaft 11 is extended, the rotational operation of the shaft 11 in the motor portion 10 is further stabilized.

### Other Embodiments

(1) In the embodiments described above, an example, in which the resin portion 42 is provided in the direction of the shaft axis X of the motor rotor 12 and the surface of the shaft 11 on the end portion side in the second yoke 17, is illustrated, but the resin portion 42 may be provided in a surface of the first yoke 16 facing the pump body 32. The resin portion 42 is present in both end surfaces of the motor rotor 12 in the direction of the shaft axis X and thereby a shape of the yoke 14 in the direction of the shaft axis X is stabilized by being sandwiched by the resin portions 42. For the rest, the motor rotor 12 is configured such that a plurality of permanent magnets 15 are disposed on an outer peripheral surface of the first yoke 16 and the resin portion 42 may be formed by being filled with resin between adjacent permanent magnets 15 in the direction of the shaft axis X.
(2) In the embodiments described above, an example, in which the shape of the cylindrical yoke 14 is held by combining the dowels 41 and the resin portion 42, is illustrated, but in a case where the shape of the cylindrical yoke 14 can be held only by the resin portion 42, the dowels 41 may not be provided in the steel sheets of the yoke 14. For the rest, the shape of the yoke 14 may be held by welding the laminated electromagnetic steel sheets without providing the resin portion 42.
(3) In the embodiments described above, an example, in which the pump main body is configured of two members of the pump body 32 and the pump cover 50, is illustrated, but the pump main body may be configured of one member that is formed by integrating the pump body 32 and the pump cover 50.

This disclosure can be widely used in the electric pump in which the motor portion and the pump portion are housed.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made by others, and equivalents employed, without departing from the spirit of the present invention. Accordingly, it is expressly intended that all such variations, changes and equivalents which fall within the spirit and scope of the present invention as defined in the claims, be embraced thereby

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. An electric pump (1) comprising:
a motor rotor (12) that has a cylindrical yoke (14) and is rotated by an electromagnetic force;
a pump portion (20) that has an outer rotor (22) and an inner rotor (21);
a shaft (11) that transmits a rotational force from the motor rotor to the pump portion (20) by fixing the motor rotor (12) on one side and fixing the inner rotor (21) on the other side;
a motor housing (31) in which a coil portion (13B) is fixed to an inner peripheral surface and the motor rotor (12) is housed on the inside of the coil portion (13B); and
a pump main body (32) that houses the pump portion (20),
wherein the pump main body (32) has a bearing portion (33) that supports a portion of the shaft (11) between the motor rotor (12) and the inner rotor (21), and
wherein the inner rotor (21) has a first recessed portion (23) of a diameter greater than that of the shaft (11) on a side facing the bearing portion and a part of the bearing portion is inserted into the first recessed portion (23) to be disposed.

2. The electric pump according to claim 1,
wherein the motor rotor (12) has a second recessed portion (18) of a diameter greater than that of the shaft (11) on a side facing the bearing portion (33) and a part of the bearing portion (33) is inserted into the second recessed portion (18) to be disposed.

3. The electric pump according to claim 2,
wherein the yoke (14) includes a first yoke (16) that is positioned on an inner peripheral side of the coil portion (13B) and a second yoke (17) that is provided continuously to the first yoke (16) and protrudes on a side opposite to the pump portion (20) with respect to the first yoke (16) in an axial direction of the yoke (14), and
wherein a hole portion (19) capable of fixing the shaft (11) is formed in the second yoke (17) and the second recessed portion (18) is formed on a side facing the bearing portion in the first yoke (16).

4. The electric pump according to any one of claims 1 to 3,
wherein an end portion of the shaft (11) protruding from the pump portion is journaled by the pump main body (32).

5. The electric pump according to any one of claims 1 to 4,
wherein the shaft (11) and the bearing portion (38) are formed of a ferrous material.

6. The electric pump according to any one of claims 1 to 5,
wherein the cylindrical yoke (14) includes magnetic bodies that are laminated so that a through-hole (16a) continuous along the axial direction of the yoke (14) is formed and a resin portion (42) with which the through-hole is filled.
